# EUROPEAN PATENT APPLICATION

(11) **EP 1 099 627 A1**
(43) Date of publication of application: **16.05.2001**
(21) Application number: 00309429.9
(22) Date of filing: 26.10.2000
(51) Int. Cl.: B64D 11/06, B60N 2/34, A47C 27/00, A47C 17/80

(54) **Mattress for aircraft seat**

(30) Priority: 10.11.1999 GB 9926495
(71) Applicant: MGR Foamtex Limited, Thame, Oxfordshire OX9 3SZ (GB)
(72) Inventor: Harcourt, Geoffrey, Benson, Oxfordshire OX10 6SF (GB)
(74) Representative: Morton, Colin David

(57) **Abstract**

A mattress (7) is provided for use with an aircraft seat having a seat portion (2), a back portion (3) and a footrest (5), the aircraft seat being capable of occupying a reclining or recumbent position in which the back portion (3), seat portion (2) and footrest (5) present an upper surface for lying on. The mattress (7) has one non-planar surface (8) which has a shape complementary to the shape presented by the upper surface shape of the seat portion (2), back portion (3) and footrest (5). The other surface (9) of the mattress (7) is substantially planar. Thus, when the non-planar surface (8) of the mattress (7) is placed on the seat and back portions (2) and (3) and the footrest (5), the surface (8) of the mattress (7) conforms to the upper surface of the seat and the surface (9) of the mattress (7) presents a substantially planar horizontal surface for sleeping.

## Description

This invention relates to a mattress for use with an aircraft seat.

An aircraft seat has an upholstered seat portion and an upholstered back portion each of which is shaped to promote comfort for an occupant sitting in the seat. Certain aircraft seats, principally those in first class accommodation but increasingly in more modest classes of accommodation such as business class, are fully reclinable to enable the seat occupant to assume a recumbent position for sleeping. However, the shaping of the seat and back portions which promotes comfort in the upright or sitting position of the seat can render the seat and back portions uncomfortable for lying on. The invention aims to tackle this problem.

According to one aspect of the invention there is provided a mattress for use with an aircraft seat which is capable of occupying a reclining or recumbent position in which the seat presents an upper surface for lying on, the mattress having one non-planar surface shaped to be complementary to the shape presented by the upper surface of the seat.

Thus, whatever shape is presented by the upper surface of the seat said one surface of the mattress has a matching but opposite shape, in the manner of a mould and a moulded article. The thickness of the mattress therefore differs from place to place over its area, depending on the contours of the upper surface of the seat: when there is a protuberance on the upper surface of the seat there will be a corresponding recess in the facing area of said one surface of the mattress, and vice versa.

The other surface of the mattress is preferably planar, or substantially planar, so that when the mattress is placed on the seat with said one surface lowermost and resting on the surface of the seat, the other surface of the mattress presents a planar or substantially planar upper surface for sleeping.

In one embodiment, the mattress preferably has a transverse fold line, enabling the mattress to occupy a compact folded position for storage. There may be two such fold lines which divide the mattress into three panels which are foldable one upon the next, eg in a concertina fashion. The fold lines may be formed by fabric, such as scrim, which covers individual panels of shaped foam forming the mattress.

In another embodiment, the mattress comprises a foam pad covered by a flexible air-tight membrane which defines an enclosure surrounding the foam pad. Preferably, the foam pad is open-celled. At one end of the mattress, the enclosure preferably has a valve for controlling admission of air to, and expulsion of air from, the enclosure. One side of the foam pad is shaped to be complementary to the shape presented by the seat and the other side is preferably planar. With the valve open, the mattress can be rolled up, commencing at the other end, the air expelled from the foam pad during rolling passing through the open valve which, on completion of rolling, is closed so that the rolled mattress is retained in its fully rolled condition for storage. To unroll the mattress, the valve is opened and the foam pad draws air through the valve until the mattress returns to its operative condition in which it is ready to be placed on the aircraft seat.

According to another aspect of the invention there is provided a mattress according to said one aspect of the invention in combination with an aircraft seat.

Mattresses forming two embodiments of the invention, together with an aircraft seat with which either of the mattresses is intended to be used, will now be described, by way of example, with reference to the accompanying drawings, in which:
**Figure 1** is a perspective view of the aircraft seat,
**Figure 2** shows the seat of Figure 1 in a partially reclined position,
**Figure 3** shows the seat of Figure 1 in a fully reclined or recumbent position,
**Figure 4** is a perspective view of the first mattress in an unfolded condition,
**Figure 5** is a perspective view showing the mattress of Figure 4 in use on the fully reclined seat,
**Figure 6** is a sectional view on the line VI-VI of Figure 5, but with the mattress and seat back shown slightly separated for clarity,
**Figure 7** illustrates the mattress of Figures 4 to 6 in a compact folded condition, and
**Figures 8 to 10** illustrate the second mattress.

The aircraft seat has a superstructure 1 on which is mounted a seat portion 2 including an upholstered seat cushion and a back portion 3 including an upholstered back cushion. The back portion also includes an upholstered headrest 4. A footrest 5 is pivotally attached to the front edge of the seat cushion.

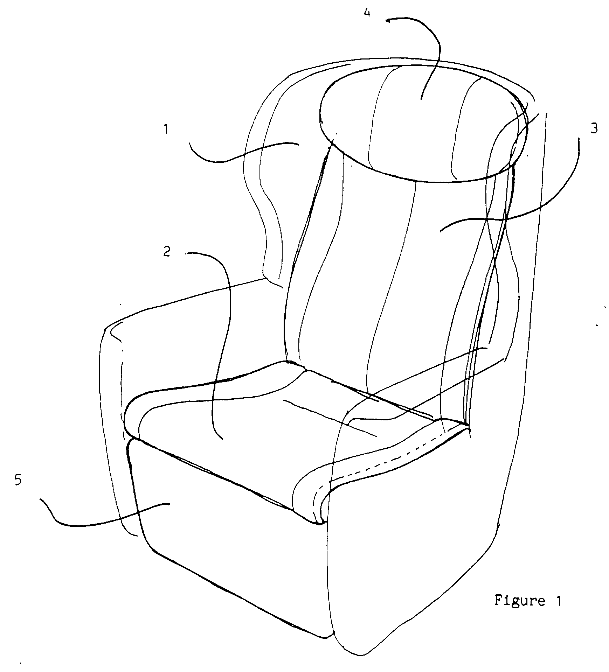

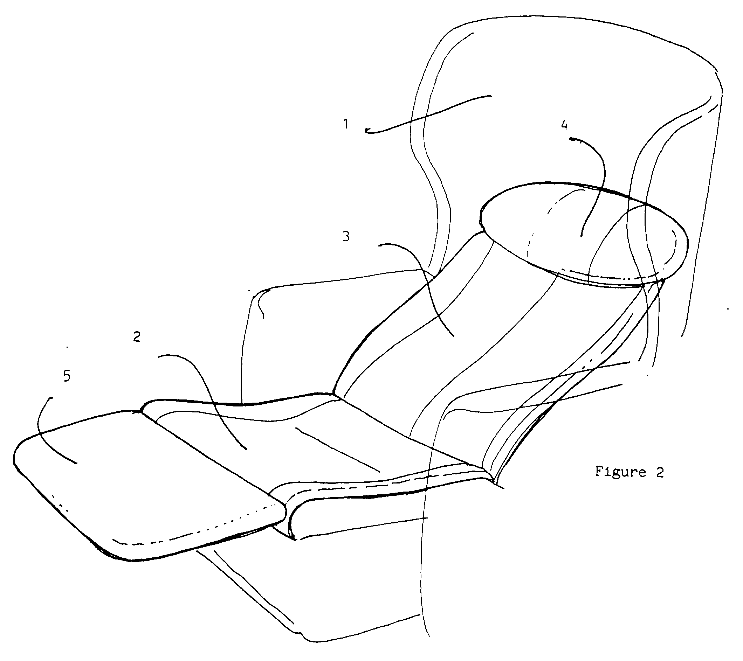

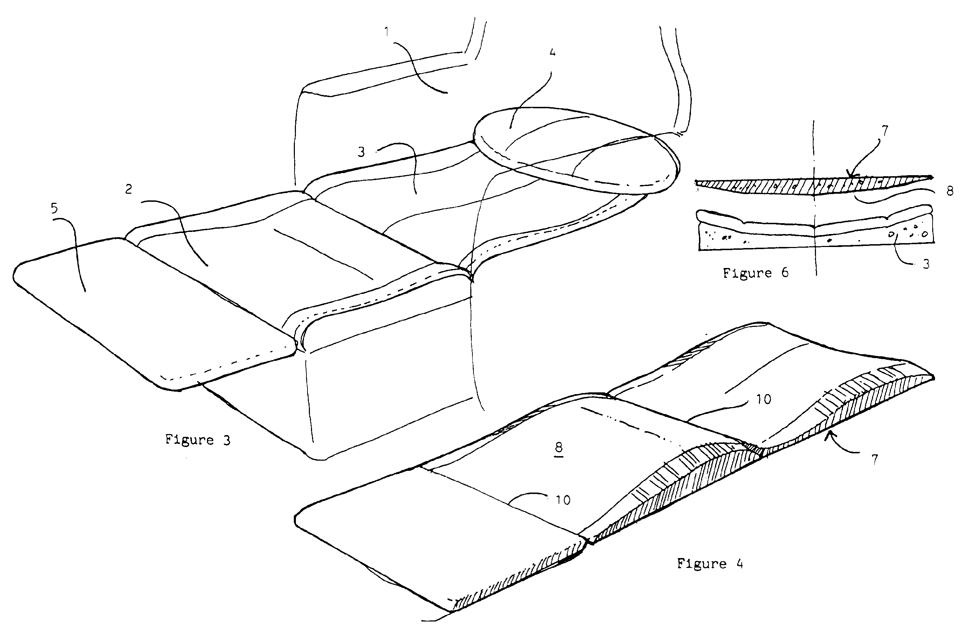

The seat and back portions 2 and 3 are movable, with respect to the superstructure 1, so as to be capable of occupying an upright position (Figure 1), a partially reclined position (Figure 2) or a fully reclined position (Figure 3) in which the back portion 3, seat portion 2 and footrest 5 present a generally horizontal upper surface to enable the seat occupant to occupy a fully recumbent or lying position for sleeping purposes.

The external surfaces of the back portion 3 and the seat portion 2 are each individually shaped for comfort of the seat occupant when in the normal sitting position. In particular, the seat portion 2 and the back portion 3 are each slightly concave (or dished) in transverse section and each has an undulating shape in longitudinal section, as shown in the drawings. But for the invention, this shaping of the seat and back portions would render the seat uncomfortable for an occupant wishing to sleep on the seat in the fully reclined position of Figure 3. By recourse to the invention, the mattress 7 shown in Figures 4 to 7 is placed on top of the fully reclined seat to make it more comfortable for sleeping. The mattress 7 has one surface 8 (the under surface in use) which has a shape (Figure 4) complementary to the upper surface shape of the seat and back portions. The shape of the surface 8 is of undulating form in the longitudinal direction of the mattress, presenting a smoothly curved concave portion between two smoothly curved convex portions, with angled longitudinal edges in the nature of chamfers, apart from a portion at the foot end of the mattress which is entirely planar to engage the planar footrest 5.

The other surface 9 of the mattress 7 (the upper surface in use) is substantially planar. Hence, when the mattress is placed on the seat and back portions 2 and 3, the surface 8 of the mattress 7 conforms to the upper surface of the seat and the surface 9 of the mattress 7 presents a substantially planar horizontal surface for sleeping. This complementary shaping assists location and retention of the mattress 7 on the seat, and further retention can be provided by clips or Velcro pads at the respective ends of the mattress 7, such clips or pads cooperating with complementary elements on the seat.

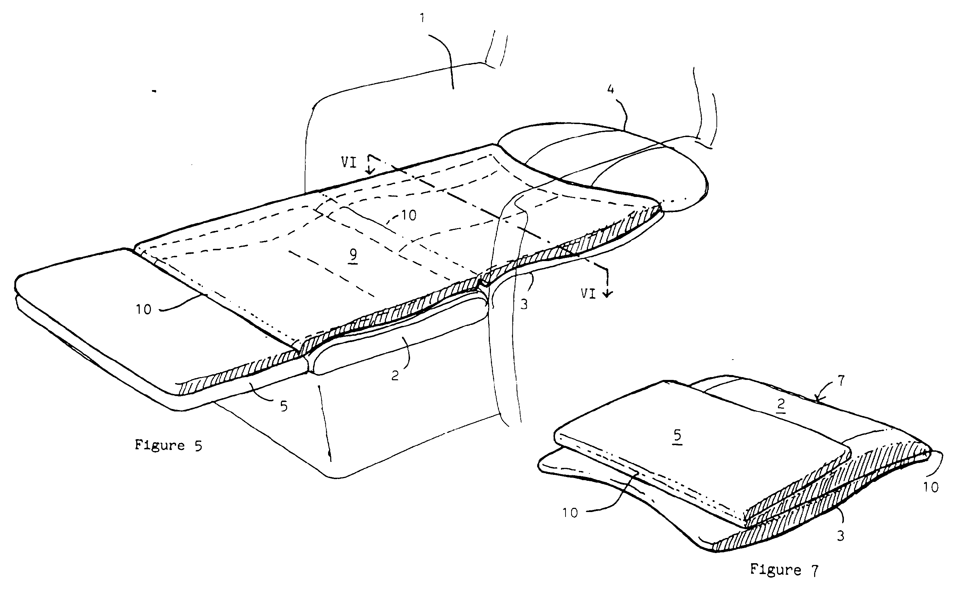

The mattress 7 has two transverse fold lines 10 which divide the mattress into three panels each of foam moulded to the required shape. The foam panels are covered by scrim which has sufficient flexibility to form the fold lines 10, enabling the mattress to be folded concertina fashion into the compact condition shown in Figure 7. The mattress 7 will normally be stored on the aircraft in this folded compact condition from which it can be readily unfolded and placed on the fully reclined seat for sleeping purposes. After use, the mattress 7 is simply removed from the seat, refolded and stored.

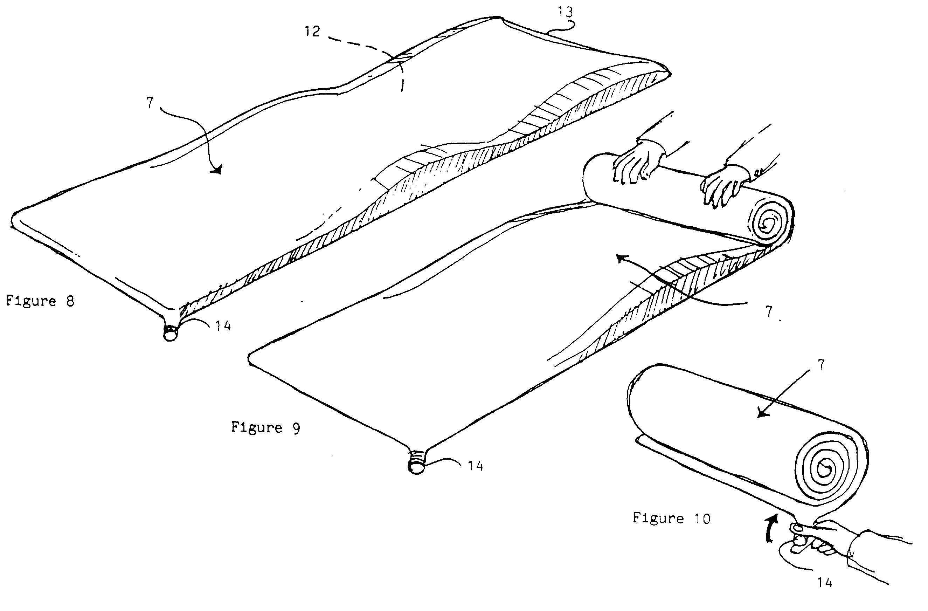

The second embodiment of mattress 7 has a foam pad 12 within a flexible air-tight membrane forming an enclosure 13 having a manually operable valve 14 at the foot end of the mattress. One surface of the foam pad 12 (the surface visible in Figure 8) is shaped to complement the shape of the aircraft seat and the other surface of the foam pad is planar.

Figure 8 shows the second embodiment of mattress 7 in its operative unrolled condition ready for the non-planar shaped surface to be placed on the aircraft seat, the other surface of the mattress then being uppermost and presenting a substantially horizontal planar surface on which the seat occupant can lie. To stow the mattress, the valve 14 is opened and the mattress is rolled up (Figure 9), commencing from the end opposite to the end having the valve 14. During rolling of the mattress, air is expelled from the open cells of the foam pad 12. When the mattress is fully rolled, the valve 14 is closed and the mattress remains in its rolled condition (Figure 10), ready for stowage.

In either embodiment, the mattress 7 thus converts the non-planar upper surface of the seat into a substantially planar surface comfortable for sleeping.

## Claims

1. A mattress (7) for use with an aircraft seat which is capable of occupying a reclining or recumbent position in which the seat presents an upper surface for lying on, the mattress (7) having one non-planar surface (8) shaped to be complementary to the shape presented by the upper surface of the seat (2,3).

2. A mattress according to claim 1, wherein the non-planar surface (8) is of undulating shape in the longitudinal direction of the mattress.

3. A mattress according to claim 2, wherein the undulating shape has a smoothly curved concave portion disposed between two smoothly curved convex portions.

4. A mattress according to claim 2 or 3, wherein the undulating shape has angled longitudinal edges in the nature of chamfers.

5. A mattress according to any of the preceding claims, wherein said one surface of the mattress has a portion at the foot end of the mattress which is planar.

6. A mattress according to any of the preceding claims, wherein the other surface (9) of the mattress (7) is substantially planar.

7. A mattress according to any one of the preceding claims, wherein the mattress (7) has a transverse fold line (10).

8. A mattress according to claim 7, wherein the mattress (7) has two transverse fold lines (10) dividing the mattress (7) into three panels.

9. A mattress according to any one of claims 1 to 6, wherein the mattress (7) comprises a foam pad (12) covered by a flexible air-tight membrane which defines an enclosure (13) surrounding the foam pad (12).

10. A mattress according to claim 9, wherein at one end of the mattress (7), the enclosure (13) has a valve (14) for controlling admission of air to, and expulsion of air from, the enclosure (13).

11. An aircraft seat in combination with a mattress (7) according to any one of the preceding claims.
